# EUROPÄISCHE PATENTSCHRIFT

(11) **EP 3 365 383 B1**
(45) Veröffentlichungstag und Bekanntmachung des Hinweises auf die Patenterteilung: **30.12.2020**
(21) Anmeldenummer: 16777908.1
(22) Anmeldetag: 05.10.2016
(51) Int. Cl.: C08G 18/67, C08G 18/73, C08G 18/81, C09J 175/14

(54) **VINYLESTERURETHANE WIE URETHAN(METH)ACRYLATE AUF BASIS NACHWACHSENDER ROHSTOFFE BEINHALTENDE KUNSTHARZ- BEFESTIGUNGSSYSTEM**
SYNTHETIC FIXING SYSTEM CONTAINING VINYLESTER URETHANES SUCH AS URETHANE(METH)ACRYLATE BASED ON RENEWABLE RAW MATERIALS
SYSTÈME DE FIXATION À BASE DE RÉSINE SYNTHÉTIQUE CONTENANT DES VINYLESTER-URÉTHANESTELS QUE DES (MÉTH)ACRYLATES D'URÉTHANE À BASE DE MATIÈRES PREMIÈRES RENOUVELABLES

(30) Priorität: 22.10.2015 DE 102015117990; 21.09.2016 DE 102016117749
(43) Veröffentlichungstag der Anmeldung: 29.08.2018
(73) Patentinhaber: fischerwerke GmbH & Co. KG, 72178 Waldachtal (DE)
(72) Erfinder: VOGEL, Martin, 79286 Glottertal (DE); SCHLENK, Christian, 79211 Denzlingen (DE); WEINELT, Christian, 79312 Emmendingen (DE); HERBSTRITT, Yvonne, 79183 Waldkirch (DE); ANKERMANN, Carmen, 79346 Endingen a.K. (DE)
(86) Internationale Anmeldenummer: PCT/EP2016/001646
(87) Internationale Veröffentlichungsnummer: WO 2017/067633

(56) Entgegenhaltungen:
- WO-A1-2011/097212
- WO-A1-2014/064097
- US-A- 5 436 112
- US-A1- 2012 071 577

## Beschreibung

Die Erfindung betrifft die Verwendung eines in Anspruch 1 oder den abhängigen Ansprüchen definiertes radikalisch härtbaren Kunstharz-Befestigungssystems, das (radikalisch härtbares bzw. bei Verwendung radikalisch härtendes) Vinylester-Urethanharz auf Basis aus nachwachsenden (mindestens teilweise biogenen oder mindestens teilweise biobasierten) Rohstoffen gewinnbarer Isocyanatverbindungen beinhaltet, im Bereich der Befestigungstechnik, zum Fixieren von Verankerungselementen in Löchern oder Spalten im Baubereich, wie auch ein Verfahren zur Herstellung nach Anspruch 9 oder 10 und ein damit erhältliches Kunstharz-Befestigungssystem.

Die WO 2014/064097 A1 sowie die DE 10 2012 219 476 A1 nennen die Verwendung von in erster Linie Tetramethylendiisocyanat, Hexamethylendiisocyanat und Decamethylendiisocyanat, die aus Vorstufen pflanzlichen Ursprungs, nämlich Bernsteinsäure, Adipinsäure oder Sebacinsäure, zugänglich sind, als Ausgangsstoffe für Urethanmethacrylatharze, die zur chemischen Befestigung verwendet werden. Die WO 2011/098272 A2 nennt in einer längeren Aufzählung unter anderem cadaverinbasiertes Diisocyanat als mögliches Edukt für Polyurethan-Präpolymere.

Andererseits gibt es im Bereich der Kunstharze und Kunststoffe aus ökologischen, wirtschaftlichen und durch die Gesetzgebung hervorgerufenen Gründen einen Bedarf, den Anteil von organisch gebundenem Kohlenstoff fossiler Bestandteile (beispielsweise aus Erdöl, Braun- oder Steinkohle gewonnen) zu vermindern, da langfristig auch mit einem Erschöpfen dieser fossilen Materialien zu rechnen ist.

Biomasse bzw. biosphärenbasierte (erneuerbare, nachhaltige, biobasierte, nachwachsende) oder eben "biogene" Rohstoffe für Kohlenstoff sind ressourcenschonend und wegen ihrer langfristigen Erhältlichkeit von besonderem Interesse.

Zur Bewertung des Anteils an biobasierten Rohstoffen wird üblicherweise der Anteil biobasierten Kohlenstoffs, nachgewiesen durch die ¹⁴C-Methode, ermittelt. Da das Verhältnis der Kohlenstoffisotope noch nach dem Produktionsprozess bestimmt werden kann, ist eine Unterscheidung zwischen fossiler und biogener Biomasse möglich.

Biobasierte Produkte können vollständig oder mindestens teilweise aus biobasierten Rohstoffen bestehen. Es können auch weitere Zusatzstoffe, anorganische Stoffe oder fossile Materialien, oder zwei oder mehr davon, enthalten sein.

Es gibt Bestrebungen, vereinheitlichte Zertifizierungen von Produkten mit biobasierten Anteilen zu ermöglichen. Ein Beispiel ist das Zertifizierungsprogramm für biobasierte Produkte nach ASTM 6866 des TÜV Rheinland (DIN CERTCO, Berlin, Deutschland) für die Erlangung eines Kennzeichnungsrechts für ein Zertifikat "Biobasiert ... % DIN Geprüft", beispielsweise "Biobasiert 50 bis 85 % DIN Geprüft".

Für die Erlangung eines derartigen Zertifikats wird eine Doppelmindestanforderung festgelegt: Zum einen muss der Mindestgehalt an organischem Material, bestimmbar als Glühverlust, mindestens 50 Gew.-% betragen.

Zum anderen muss der Gehalt an biobasiertem Kohlenstoff 20 Gew.-% überschreiten (für ein Zertifikat "Biobasiert 20 bis 50 % DIN Geprüft" muss er zwischen 20 und 50 Gew.-% liegen, für ein Zertifikat "Biobasiert 50 bis 85 % DIN Geprüft" muss er zwischen 50 und 85 Gew.-% liegen, für ein Zertifikat "Biobasiert > 85 % DIN Geprüft" muss er bei mindestens 85 Gew.-% liegen.

Die Prüfung eines Produktes erfolgt durch Probennahme (meist durch den Hersteller oder Vertreiber selbst) aus der Produktion oder dem Vertrieb/Verkauf und deren Prüfung. Es gibt eine Erstprüfung und eine regelmäßige Überwachung.

Der Glühverlust kann dabei nach üblichen Verfahren bestimmt werden. Er entspricht der Menge an organischem Material. Eine bekannte Masse mo des Prüfmaterials wird verascht, die Masse des erhaltenen Rückstands an Feststoffen m_{f} bestimmt und von mo abgezogen. Dies entspricht dem flüchtigen bzw. organischen Anteil des Prüfmaterials. Ein hoher Glühverlust deutet auf einen hohen Anteil an organischer Substanz in der Probe hin, da der enthaltene Kohlenstoff oxidiert wird und als Kohlendioxid entweicht. Die Bestimmung kann z.B. nach DIN EN 14775 oder DIN 18128 erfolgen.

Der Anteil an biobasiertem Kohlenstoff wird auf der Grundlage der ASTM 6866 (Standard Test Method for Determining the Biobased Content of Solid, Liquid and Gaseous Samples Using Radiocarbon Analysis, durchgeführt (ASTM International, D6866-12: 2008, Methode A) durchgeführt.

Eine weitere Aufgabe der Erfindung war somit, den Anteil nachwachsender oder biogener Materialien in Kunstharz-Befestigungssystemen zu erhöhen und so umweit- und nachhaltigkeitsbezogene Produktkennzahlen (wie sie z.b. in der Sachbilanz im Rahmen einer Environmental Product Declaration (EPD) oder im "Carbon Foot Print" ermittelt werden) zu verbessern. Auch der Verbrauch an Energie soll vermindert und die Kohlendioxidbilanz verbessert werden.

Es wurde nun überraschend gefunden, dass unter Verwendung von oligomeren oder polymeren Isocyanaten, insbesondere solchen, bei denen mindestens ein Teil der Isocyanatgruppen als Uretdion- oder insbesondere Isocyanurat-, Iminooxadiazinon-, Uretonimin-, Biuret-, Allophanat- und/oder Carbodiimid-Strukturen vorliegen (wobei diese vorteilhaft eine Molekulargewichtsverteilung derart aufweisen, dass keine einzelne Molekülspezies zu mehr als 50 Gewichtsprozent vorliegt und gleichzeitig mehr als 50 Gewichtsprozent der Ketten aus mindestens 3 + 1 kovalent gebundenen Monomereinheiten/Reaktanten zusammengesetzt sind (siehe genauer Polymerdefinition nach REACH)), sehr gute Kunstharz-Befestigungssystem auf Basis von daraus erhältlichen Urethan(meth)-acrylatharzen hergestellt werden können, wobei die oligomeren der polymeren Isocyanate aus unter Einsatz biologischer Rohstoffe, insbesondere solcher aus Stärke, wie solcher aus Feldmais, gewonnenen Penta- oder ferner Hexamethylendiisocyanaten erhältlich sind. Vorteilhaft weisen die oligomeren oder polymeren Isocyanate eine mittlere Funktionalität von 2 oder mehr, beispielsweise von 2 bis 5, vorteilhaft auch von 3 oder mehr, insbesondere von 3,5 bis 5 und ganz besonders bevorzugt von 3,7 bis 4,2 auf.

Unter "Funktionalität" ist die Anzahl der Isocyanatgruppen pro Molekül zu verstehen, bei Diphenylmethandiisocyanat ist diese Funkionalität (im Wesentlichen, d.h. von verunreinigungsbedingten Abweichungen abgesehen) 2, bei oligomeren oder polymeren Isocyanaten handelt es sich um eine (in der Regel vom Hersteller angegebene) mittlere Funktionalität, die gemäß der Formel $f = \frac{\sum {n}_{i} ⋅ {f}_{i}}{\sum {n}_{i}}$ (f = Funktionalität, nᵢ = Zahl der Moleküle einer Funktionalität fᵢ,) errechnet werden kann.

Beispiele für Penta- oder Hexamethylendiisocyanat-basierte oligomere oder polymere Isocyanate sind die unter dem Namen Desmodur® eco N 7300 von Bayer MaterialScience AG, Leverkusen, Deutschland kommerziell erhältlichen biobasierten aliphatischen Oligoisocyanate aus Pentamethylendiisocyanat, die bisher als Härterkomponente für Lacke angeboten werden, oder die unter dem Namen Tolonate™ X FLO 100 von Vencorex Chemicals bzw. Vencorex Holding, Saint-Priest, Frankreich, kommerziell erhältlichen biobasierten Isocyanate aus Hexamethylendiisocyanat, die bisher als Edukte für 1- oder 2-komponentige Polyurethane oder für Kleber oder Dichtmassen angeboten werden.

Für Referenzzwecke offenbart die vorliegende Offenbarung auch die Verwendung von monomerem biobasiertem Pentamethylendiisocyanat, da es bei der Reaktion mit hydroxygruppen tragenden (Meth)acrylaten auch zur Herstellung von vorteilhaften Urethan-(Meth)acrylaten kommt.

Besonders vorteilhaft werden polymere Diisocyanate mit einer C₂-C₈-Kette eingesetzt, insbesondere mit einer C₂-C₆-Kette, da längere Methylenketten zu Harzen führen können, die nach der Härtung nur Festkörper mit für die Befestigungstechnik unzureichender Härte und Festigkeit und zu geringer Wärmeformbeständigkeit ergeben können.

Eine erste Ausführungsform der Erfindung betrifft daher die Verwendung eines radikalisch härtbaren Kunstharz-Befestigungssystems als Klebemittel zur Befestigung von Verankerungsmitteln in Bohrlöchern oder Spalten, wobei das radikalisch härtbare Kunstharz-Befestigungssystem ein Vinylester-Urethanharz auf Basis aus nachwachsenden biogenen oder biobasierten Rohstoffen erhaltener oligomerer oder polymerer Isocyanate als Isocyanatverbindungen beinhaltet, wobei der Anteil an biogenen oder biobasierten Rohstoffen durch die ¹⁴C-Methode nachgewiesen und der Anteil an biobasiertem Kohlenstoff auf der Grundlage der ASTM International, D6866-12: 2008, Methode A, bestimmt wird.

In einer weiteren Ausführungsform betrifft die Erfindung ein Verfahren zur Herstellung eines Kunstharz-Befestigungssystems wie im letzten Absatz definiert, bei dem ein oder mehrere oligomere oder polymere Isocyanate entweder erst unvollständig (unter Erhaltung eines Teils der Isocyanate) zu Präpolymeren umgesetzt werden und dann eine Umsetzung mit hydroxysubstituierten (Meth)acrylaten zu den Vinylester-Urethanharzen erfolgt, oder (vorzugsweise) direkt nur eine Umsetzung mit hydroxysubstituierten (Meth)acrylaten durchgeführt wird, und gewünschtenfalls weitere Zusätze zugefügt werden. Sofern ein Mehr-, wie Zwei-Komponentensystem hergestellt werden soll, beinhaltet die Herstellung vorzugsweise auch das Verteilen der Bestandteile, wie Vinylester-Urethanharz und ein Härter und ggf. weitere Zusätze, auf zwei oder mehr separate Komponenten in entsprechenden Behältnissen, um eine Umsetzung erst bei der Verwendung zu ermöglichen.

In einer dritten Ausführungsform betrifft die Erfindung die Verwendung eines wie in Anspruch 1 oder einem der abhängigen Ansprüche definierten Kunstharz-Befestigungssystems zum Befestigen (Fixieren) von Verankerungselementen in einem Loch oder Spalt in einem Bausubstrat.

Die nachfolgenden Definitionen dienen der Klärung bestimmter Begriffe oder Symbole und der Beschreibung besonderer Ausführungsformen der Erfindung, wobei in den vor- und nachstehend genannten Ausführungsformen der Erfindung einzelne, mehrere oder alle Begriffe oder Symbole durch speziellere Definitionen ersetzt werden können, was jeweils besondere Ausführungsformen der Erfindung darstellt.

Wo Gewichtsangaben in Prozent (Gew.-%) gemacht werden, beziehen sich diese, wenn nichts anderes gesagt ist, auf die Gesamtmasse der Reaktanden und Zusätze aller (im fertig formulierten Zustand flüssigen und pastösen) Komponenten des Kunstharz-Befestigungssystems, also ohne Verpackung, d.h. die Masse der gesamten zugehörigen Reaktionsharzformulierungsbestandteile.

Wo "basierend auf" oder "auf Basis" steht, bedeutet dies beispielsweise, dass der betreffende Bestandteil bzw. bei Mehrkomponentensystemen die entsprechende Komponente mehr als 50, vorzugsweise mehr als 60, wie mehr als 70 Gew.% bis zu jeweils 100 Gew.-% (bezogen auf den jeweiligen Bestandteil, z.B. "Härter") der nach "basierend auf" oder "auf Basis von" genannten Stoffe enthält - im Falle von "biobasiert" liegt der Anteil an biogenem Kohlenstoff bei Einzelmolekülen der betreffenden Verbindung vorzugsweise bei mindestens 10, vorzugsweise mindestens 20 Gew.-% bis zu jeweils 100 Gew.-%, bezogen auf das jeweilige (Durchschnitts)molekül.

### "Gewinnbar(er)" bedeutet insbesondere "gewonnen(er).

"Nieder" bedeutet insbesondere C₁-C₆.

"Beinhalten" oder "umfassen" bedeutet, dass neben den genannten Komponenten oder Merkmalen noch andere vorhanden sein können, steht also für eine nicht abschließende Aufzählung, im Gegensatz zu "enthalten", das eine abschließende Aufzählung der bei seiner Verwendung aufgezählten Komponenten oder Merkmale bedeutet.

Wo das Attribut "ferner" erwähnt wird, bedeutet dies, dass Merkmale ohne dieses Attribut stärker bevorzugt sein können.

### (Meth)acryl steht für Acryl, Methacryl oder Acryl und Methacryl (als Gemisch).

Die Art und Weise zur Herstellung von Vinylester-Urethanharzen, insbesondere Urethan(meth)acrylaten, und zur Durchführung von Vorverlängerungsreaktionen und die Vielzahl der Vorverlängerungsreaktionsmöglichkeiten zur Präpolymerbildung sind dem Fachmann bekannt und werden hier nicht explizit beschrieben. Es sei hier beispielhaft auf die Anmeldungen EP 0508183 A1, EP 0432087 A1 und die noch nicht offengelegte Anmeldung vom 14.02.2014 mit der Anmeldungsnummer DE 10 2014 101 861.3

Insbesondere handelt es sich bei dem zur Erfindung gehörigen Herstellungsverfahren um folgendes Verfahren (und bei den zur Erfindung gehörigen Vinylester-Urethanharzen das damit erhältliche Vinylesterurethhanharz):
Es handelt sich um ein Verfahren zur Herstellung von Vinylester-Urethanharzen, insbesondere Urethan(meth)acrylat-Harzen (nachfolgend auch U(M)A-Harze), welches dadurch gekennzeichnet ist, dass als Edukt für die Herstellung des Vinylesterurethan-, insbesondere U(M)A-Harzes, ein oligomeres oder polymeres Isocyanat wie vor- oder nachstehend beschrieben verwendet und mit einer mindestens eine Vinylgruppe tragenden Hydroxyverbindung (insbesondere wie nachstehend definiert) umgesetzt wird.

Das Verfahren zur Herstellung der Vinylester-Urethanharze, insbesondere Urethan(meth)-acrylat-Harze, findet vorzugsweise in Gegenwart von einem Katalysator statt, wobei entsprechende Katalysatoren, die die Reaktion zwischen Hydroxylgruppen und Isocyanatgruppen katalysieren, dem Fachmann hinreichend bekannt sind, beispielsweise einem tertiären Amin, wie 1,2-Dimethylimidazol, Diazabicyclooctan, Diazabicyclononan, oder einer Organometallverbindung (z.B. von K, Sn, Pb, Bi, Al und insbesondere auch von Übergangsmetallen wie Ti, Zr, Fe, Zn, Cu); sowie Mischungen von zwei oder mehr davon; beispielsweise (bezogen auf die Reaktionsmischung) in einem Anteil von 0,001 bis 2,5 Gew.-%; vorzugsweise in Gegenwart von Stabilisatoren (Inhibitoren), wie beispielsweise Phenothiazin, TEMPO, TEMPOL, Hydrochinon, Dimethylhydrochinon, Triphenylphosphit, tert.-Butylhydrochinon, Hydrochinonmonoethylether, tert.-Butylbrenzkatechin und/oder p-Benzochinon, sowie Mischungen von zwei oder mehr davon; z.B. in einer Menge von 0,00001 bis 2,5 Gew.-%, bezogen auf die Reaktionsmischung, statt, bei bevorzugten Temperaturen z.B. im Bereich von 0 bis 120 °C, vorteilhaft von 50 bis 95 °C.

Beispiele für geeignete Katalysatoren und Stabilisatoren sind dem Fachmann bekannt, beispielsweise wie aus "Polyurethane Kunststoff-Handbuch 7" von Becker, G.W.; Braun, D.; Oertel, G., 3. Auflage, Carl Hanser Verlag, 1993, ersichtlich.

Die Reaktion kann ohne Lösungsmittel (ein mindestens eine Vinylgruppe tragende Hydroxyverbindung, insbesondere ein mindestens eine Vinylgruppe aufweisender (insbesondere aliphatischer) Alkohol, insbesondere Hydroxy(nieder)alkyl(meth)acrylat, vor allem Hydroxypropylmethacrylat, als Ausgangsmaterial selbst dient dann als Lösungsmittel) oder in Gegenwart eines geeigneten Lösungsmittels durchgeführt werden, beispielsweise eines weiteren Reaktivverdünners. "Reaktiv" bezieht sich dabei hier auf die Formulierung des Klebemittels und dessen Aushärtung, nicht auf die Addition des Alkohols an das oligomere oder polymere Isocyanat.

Die Reaktion kann auch derart geführt werden, dass über eine Vorverlängerung ein Präpolymer gebildet und erst danach die noch übrigen (freien oder maskierten) Isocyanatgruppen mit der mindestens eine Vinylgruppe aufweisenden (= tragenden) Hydroxyverbindung, insbesondere einem Hydroxy(nieder)alkyl(meth)acrylat (insbesondere wie vor- oder nachstehend genauer definiert), umgesetzt wird.

Für die Herstellung von Präpolymeren finden dabei zum Erzielen einer mittleren Isocyanat-Funktionalität größer als zwei die oben genannten oligomeren oder polymeren Isocyanate und Polyole mit zwei oder mehr Hydroxygruppen pro Molekül und/oder Polyamine mit zwei oder mehr Aminogruppen pro Molekül oder Aminole mit zwei oder mehr Amino- und Hydroxygruppen pro Molekül Verwendung.

Polyole (Di- oder höherfunktionale Alkohole) sind dabei insbesondere zwei- oder höherfunktionale Alkohole, z.B. Folgeprodukte des Ethylen- oder Propylenoxids, wie Ethandiol, Di- bzw. Triethylenglykol, Propan-1,2- oder -1-3-diol, Dipropylenglykol, andere Diole, wie 1,2-, 1,3- oder 1,4-Butandiol, 1,6-Hexandiol, Neopentylglykol, 2-Ethylpropan-1,3-diol oder 2,2-Bis(4-hydroxycyclohexyl)-propan, Triethanolamin, Bisphenol A oder Bisphenol F oder deren Oxyethylierungs-, Hydrierungs- und/oder Halogenierungsprodukte, höherwertige Alkohole, wie z.B. Glycerin, Trimethylolpropan, Hexantriol und Pentaerythrit, hydroxylgruppenhaltige Polyether, z.B. Oligomere aliphatischer oder aromatischer Oxirane und/ oder höherer cyclischer Ether, z.B. von Ethylenoxid, Propylenoxid, Styroloxid und Furan, Polyether mit jeweils endständigem Hydroxy, die in der Hauptkette aromatische Struktureinheiten enthalten, z.B. die des Bisphenol A bzw. F, hydroxylgruppenhaltige Polyester auf der Basis der oben genannten Alkohole bzw. Polyether und Dicarbonsäuren bzw. ihrer Anhydride, z.B. Adipinsäure, Phthalsäure, Isophthalsäure, Terephthalsäure, Tetra- bzw. Hexahydrophthalsäure, Endomethylentetrahydrophthalsäure, Tetrachlorphthalsäure oder Hexachlor-endomethylentetrahydrophthalsäure, Maleinsäure, Fumarsäure, Itaconsäure, Sebacinsäure oder dergleichen. Besonders bevorzugt sind Niederalkandiole (ergeben divalente Reste -O-Niederalkylen-O-).

Aminole (Aminoalkohole) sind Verbindungen, die insbesondere eine oder mehrere Hydroxy- und eine oder mehrere Aminogruppen in ein und demselben Molekül enthalten. Bevorzugte Beispiele sind aliphatische Aminole, insbesondere Hydroxyniederalkylamine (ergeben Reste -NH-Niederalkylen-O- oder -O-Niederalkylen-NH-), wie Ethanolamin, Diethanolamin oder 3-Aminopropanol, oder aromatische Aminole, wie 2-, 3- oder 4-Aminophenol.

Polyamine (Di- oder höherfunktionale Amine) sind organische Aminoverbindungen mit 2 oder mehr Aminogruppen, insbesondere Hydrazin, N,N'-Dimethylhydrazin, aliphatische Di- oder Polyamine, insbesondere Niederalkandiamine (ergeben Reste -NH-Niederalkyl-NH-), wie Ethylendiamin, 1,3-Diaminopropan, Tetra- oder Hexamethylendiamin oder Diethylentriamin, oder aromatische Di- oder Polyamine, wie Phenylendiamin, 2,4- und 2,6-Toluoldiamin, Benzidin, o-Chlorbenzidin, 2,5-p-Dichlorphenylendiamin, 3,3'-Dichlor-4,4'-diaminodiphenylmethan oder 4,4'-Diaminodiphenylmethan, Polyetherdiamine (Polyethylenoxide mit endständigen Aminogruppen) oder Polyphenyl/Polymethylen-polyamine, die durch Kondensation von Anilinen mit Formaldehyd erhältlich sind.

Entweder die Präpolymeren oder direkt die oligomeren oder polymeren Isocyanate werden (sodann) mit mindestens einer geeigneten je Molekül mindestens eine Hydroxygruppe tragenden Vinylverbindung, insbesondere ausgewählt aus Hydroxy-(C₁₋₇-alkyl)-(meth)acrylat, wie Hydroxypropyl(meth)acrylat oder Hydroxyethyl(meth)acrylat, umgesetzt zu den erhältlichen Vinylester-Urethanharzen (auch z.T. als Reaktiv(kunst)harze bezeichnet).

Das Verhältnis von "freien" Isocyanatgruppen (worin auch z.B. maskierte Isocyanatgruppen umfasst sind) des oder der Isocyanate zu Hydroxygruppen der mindestens eine Vinylgruppe aufweisenden Hydroxyverbindung (en), wie Hydroxyniederalkyl(meth)acrylate wird vorteilhaft derart gewählt, dass eine schnelle und vollständige Umsetzung der Isocyanatgruppen resultiert, das heißt, die Molmenge der Hydroxygruppen (und damit die korrelierende Mol-Menge an z.B. Hydroxyniederalkyl(meth)acrylat) ist größer als die Mol-Menge der Isocyanatgruppen, z.B. 1,03 bis 5-mal so groß, wie z.B. 1,05 bis 4 mal so groß oder 1,1 bis 3 mal so groß. Überschüssige mindestens eine Vinylgruppe aufweisenden Hydroxyverbindung wie Hydroxyniederalkyl(meth)acrylat dient als Reaktivverdünner. Damit ist sicherzustellen, dass der Anteil freier Isocyanatgruppen im resultierenden Produkt besonders niedrig ist, was kennzeichnungsfreie oder -arme erfindungsgemäße Kunstharz-Befestigungssystem zugänglich macht. In einer besonderen Ausführungsform enthält das fertige Reaktiv(kunst)harz nahezu keine freien Hydroxyniederalkyl(meth)acrylate mehr, d.h. die Umsetzung wird mit einem Verhältnis Hydroxygruppen zu Isocyanatgruppen nahe 1, z.B. 0,98-1,3, insbesondere 0,99-1,20 wie 1,0-1,17 durchgeführt, sodass der Restgehalt mindestens eine Vinylgruppe aufweisenden Hydroxyverbindung(en), wie Hydroxypropyl-(meth)acrylat oder Hydroxyethyl(meth)acrylat, von < 4 %, z.B. < 3 % und insbesondere < 1 oder sogar < 0,1 % ist.

Die mittels dieses Verfahrens erhältlichen U(M)A-Harze sind als bevorzugte Vinylester-Urethanharze in den Erfindungsverkörperungen vorgesehen.

Das (radikalisch härtbare ungesättigte) Vinylester-Urethanharz (bzw. die Gesamtmenge seiner Komponenten) liegt beispielsweise in einem Gewichtsanteil von 1 bis 99,5 %, wie etwa von 10 bis 90, z.B. 15 bis 80 %, vor.

Wichtige Beispiele für mögliche weitere Inhaltsstoffe (Bestandteile oder Zusätze) sind insbesondere (beispielsweise aminische) Beschleuniger, Inhibitoren, reaktive Verdünner, Thixotropiermittel, Füllstoffe und sonstige Additive.

Als aminische Beschleuniger kommen solche mit hinreichend hoher Aktivität in Frage, wie insbesondere (vorzugsweise tertiäre, insbesondere hydroxyalkylaminogruppensubstituierte) aromatische Amine ausgewählt aus der Gruppe, die aus epoxyalkylierten Anilinen, Toluidinen oder Xylidinen, wie z.B. ethoxyliertem Toluidin, Anilin oder Xylidin, beispielsweise N,N-bis(hydroxymethyl- oder hydroxyethyl)-toluidinen oder -xylidinen, wie N,N-bis(hydroxypropyl-oder hydroxyethyl)-p-toluidin, N,N-Bis(hydroxyethyl)-xylidin und ganz besonders entsprechenden höher alkoxylierten technischen Produkten, ausgewählt sind. Ein oder mehrere derartige Beschleuniger sind möglich. Die Beschleuniger haben, vorzugsweise einen Anteil (Konzentration) von 0,005 bis 10, insbesondere von 0,1 bis 5 Gew.-%.

Als Inhibitoren können beispielsweise nichtphenolische (anaerobe) und/oder phenolische Inhibitoren zugesetzt werden.

Als phenolische Inhibitoren kommen (nicht-alkylierte oder alkylierte) Hydrochinone, wie Hydrochinon, Mono-, Di- oder Trimethylhydrochinon, (nichtalkylierte oder alkylierte) Phenole, wie 4,4'-Methylen-bis(2,6-di-tert-butylphenol), 1,3,5-Trimethyl-2,4,6-tris(3,5-di-tert-butyl-4-hydroxybenzyl)-benzol, (nichtalkylierte oder alkylierte) Brenzcatechine wie tert.-Butylbrenzcatechin, 3,5-Di-tert-butyl-1,2-benzoldiol oder 4-tert.-Butyl-1,2-benzoldiol, oder insbesondere 4-Methoxyphenol, oder Gemische von zwei oder mehr davon, in Frage. Diese habenvorzugsweise einen Anteil von bis zu 1 Gew.-%, insbesondere zwischen 0,0001 und 0,5 Gew.-%, z.B. zwischen 0,01 und 0,1 Gew.-%.

Als nicht-phenolische oder anaerobe (d.h. im Gegensatz zu den phenolischen Inhibitoren auch ohne Sauerstoff wirksame) Inhibitoren (welche insbesondere die Aushärtezeiten kaum beeinflussen) kommen vorzugsweise Phenothiazin oder organische Nitroxylradikale in Betracht. Als organische Nitroxylradikale können beispielsweise solche zugesetzt sein, wie sie in der DE 199 56 509, die hier insbesondere bezüglich der darin genannten Verbindungen durch Bezugnahme inkorporiert wird, beschrieben sind, insbesondere 1-oxyl-2,2,6,6-tetramethylpiperidin-4-ol ("4-OH-TEMPO"). Der Gewichtsanteil der nicht-phenolischen Inhibitoren liegt vorzugsweise im Bereich von 0,1 ppm bis 2 Gew.-%, vorzugsweise im Bereich von 1 ppm bis 1 Gew.-%.

Als Thixotropiermittel können übliche thixotropieverursachende Rheologiehilfsmittel verwendet werden, wie pyrogene Kieselsäure. Sie können z.B. in einem Gewichtsanteil von 0,01 bis 50 Gew.-%, beispielsweise von 1 bis 20 Gew.-%, zugesetzt werden.

Als Füllstoffe finden übliche Füllstoffe, insbesondere Zemente (z.B. Portlandzemente oder Tonerdeschmelzzemente), Kreiden, Sand, Quarzsand, Quarzmehl oder dergleichen, die als Pulver, in körniger Form oder in Form von Formkörpern zugesetzt sein können, Verwendung, oder andere, wie beispielsweise in WO 02/079341 und WO 02/079293 genannt (die hier diesbezüglich durch Bezugnahme aufgenommen werden), oder Gemische davon, wobei die Füllstoffe ferner oder insbesondere auch silanisiert sein können. Die Füllstoffe können im Falle von Mehrkomponentenkits in einer oder in mehreren Komponenten eines erfindungsgemäßen oder erfindungsgemäß verwendbaren Mehrkomponentenkits, beispielsweise einer oder beiden Komponenten eines entsprechenden Zweikomponentenkits, vorhanden sein; der Anteil an Füllstoffen beträgt vorzugsweise 0 bis 90 Gew.-%, beispielsweise 10 bis 90 Gew.-% (wobei auch beim Einbringen von Verankerungselementen zerstörtes Hüllmaterial (z.B. zersplittertes Glas oder zersplitterter Kunststoff), beispielsweise Scherben aus Patronen, mit als Füllstoff gerechnet werden kann, vorzugsweise wird) Zusätzlich oder alternativ können hydraulisch härtbare Füllstoffe, wie Gips (z.B. Anhydrit), Branntkalk oder Zement (z.B. Tonerd- oder Portlandzement), Wassergläser oder aktive Aluminiumhydroxide, oder zwei oder mehr davon, zugesetzt werden.

Auch weitere Additive können zugesetzt sein, wie Weichmacher, nicht reaktive Verdünnungsmittel, Flexibilisatoren, Stabilisatoren, Rheologiehilfsmittel, Netzmittel und Farbstoffe. Derartige weitere Zusätze können vorzugsweise insgesamt in Gewichtsanteilen von insgesamt 0 bis 90 %, beispielsweise von 0 bis 40 Gew.-%, zugesetzt sein. Reaktivverdünner sind vorzugsweise in einem Anteil vom 0,01 bis 90 Gew.-%, insbesondere von 0,5 bis 75 Gew.-%, insbesondere von 1 bis 40 Gew.-% in den erfindungsgemäßen oder erfindungsgemäß verwendeten Kunstharz-Befestigungssystemen beinhaltet. Bei den Reaktivverdünnern handelt es sich um niederviskose Verbindungen mit härtbaren ungesättigten, wie olefinischen, Gruppen, beispielsweise ausgewählt aus Mono-, Di-, Tri-oder Poly(meth)acrylaten. Sie werden bevorzugt so gewählt, dass ihre Verwendung nicht zur einer Kennzeichnung führt, die Eigenschaften des ausgehärteten Systems aber auch nicht negativ beeinflussen. Hier sind insbesondere radikalisch härtbare Oligoalkylenglykol-di(meth)acrylate, vorzugsweise der Formel I, 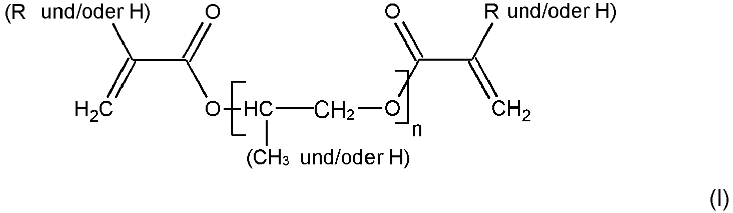 worin die Reste R unabhängig voneinander für C₁-C₇-Alkyl stehen, insbesondere für Methyl, und worin n für durchschnittlich 2,5 bis 13, vorzugsweise für 3,5 bis 10, insbesondere für 4 bis 8 und vor allem für 4,2 bis 7, insbesondere für 4,5 und 6 steht, z.B. vorzugsweise Triethylenglykoldi(meth)acrylat (TIEGDMA), Tetraethylenglykoldi(meth)acrylat (TTEGDMA), Polyethylenglykol200-Di(meth)acrylat (PEG200DMA) (Mittelwert n ≈ 4,5) (am stärksten bevorzugt), Polyethylenglykol400-Di(meth)acrylat (PEG400DMA) (Mittelwert n = 9), ferner Polyethylenglykol600-Di(meth)acrylat (PEG600DMA) (Mittelwert n = 13), zu bevorzugen, ganz besonders bevorzugt ist hier SR210 von Sartomer, das im Gegensatz zu reinem Tetraethylenglykol bereits eine zur Erfüllung der Polymerdefinition ausreichende Molekulargewichtsverteilung aufweist. Besonders bevorzugt sind auch Reaktivverdünner, wie sie in DE 10 2014 103923 A1, die hier durch Bezugnahme aufgenommen wird beschrieben sind, insbesondere Isobornylmethacrylat.

Der Härter beinhaltet mindestens ein Peroxid als eigentlichen Initiator. Der Begriff "Härter" bedeutet dabei vorzugsweise vor- und nachstehend reine Initiatoren oder phlegmatisierte Initiatoren mit oder ohne Füllstoffzusatz und/oder weitere Zusätze, wie Wasser, Verdickungsmittel und/oder weitere Zusatzstoffe, wie Farbstoffe, Additive und dergleichen, mit anderen Worten, eine komplette Härterkomponente. Zur Phlegmatisierung können übliche Zusätze, wie Gips, Kreide, pyrogene Kieselsäure, Phthalate, Chlorparaffin oder dergleichen, zugesetzt sein. Daneben können auch noch Füllstoffe und/ oder (insbesondere zur Herstellung einer Paste oder Emulsion) Lösungsmittel, insbesondere Wasser, Verdickungsmittel, Füllstoffe (wie z.B. oben genannt) und weitere der oben genannten Zusätze zugesetzt sein. Der Anteil aller Zusätze kann beispielsweise bei einem Gewichtsanteil von insgesamt 0,1 bis 70 Gew.-%, z.B. von 1 bis 40 Gew.-%, liegen.

Bezogen auf die Härterkomponente liegt der Anteil des Initiators in einer möglichen bevorzugten Ausführungsform der Erfindung bei 0,5 bis 90 Gew.-%, insbesondere bei 0,9 bis 30 Gew.-%. In einer besonders bevorzugten Ausführungsform liegt der Anteil des Initiators bezogen auf die Härterkomponente und/oder das Gesamtsystem bei < 1 %.

Als Initiator für die Härtung der erfindungsgemäßen oder erfindungsgemäß verwendeten Kunstharz-Befestigungssysteme finden im Falle der radikalischen Polymerisation beispielsweise radikalbildende Peroxide, z.B. organische Peroxide, wie Diacylperoxide, z.B. Dibenzoylperoxid, Ketonperoxide, wie Methylethylketonperoxid oder Cyclohexanonperoxid, oder Alkylperester, wie tert-Butylperbenzoat, anorganische Peroxide, wie Persulfate oder Perborate, sowie Mischungen davon Verwendung.

Der Anteil des Härters an einem erfindungsgemäßen oder erfindungsgemäß verwendeten Kunstharz-Befestigungssystem insgesamt liegt dabei vorzugsweise in einem Bereich von 1 bis 60 Gew.-%, z.B. 2 bis 50 Gew.-%.

Alternativ kann für die Härtung der erfindungsgemäßen oder erfindungsgemäß verwendeten Reaktiv-Kunstharzformulierungen ein Thiolbasiertes Härtersystem gemäß der Patentanmeldung DE 10 2013 114 061.0 oder DE 10 2014 105 202.1 oder ein auf CHaciden Verbindungen basiertes System wie in DE 10 2015 003 221 A1 beschrieben verwendet werden, die hier diesbezüglich durch Bezugnahme aufgenommen werden. Erfindungsverkörperungen mit den beiden genannten Thiol- oder CH-Acide-Verbindungenbasierten Härtern bilden bevorzugte Ausführungsformen.

Unter einem Loch oder Spalt ist ein solches Loch oder ein solcher Spalt zu verstehen, das oder der in einem festen (insbesondere bereits als solcher fertiggestellten) Untergrund (Substrat), insbesondere Mauerwerk oder Beton, ggf. auch in einem rissigen Substrat, wie rissigem Beton, vorhanden ist, beispielswiese ein Bohrloch.

In einer besonderen und vorteilhaften Ausführungsform der Erfindung sind die härtbaren Komponenten und die zugehörigen Härter (Härterkomponenten) eines erfindungsgemäßen oder erfindungsgemäß verwendeten Kunstharz-Befestigungssystems voneinander getrennt in einem Zwei- oder Mehrkomponentensystem aufbewahrt, bevor sie am gewünschten Ort (z.B. bei oder in einem Loch oder Spalt, wie Bohrloch) miteinander vermischt werden.

Die erfindungsgemäßen oder erfindungsgemäß verwendbaren Kunstharz-Befestigungssysteme sind dann als Mehr-Komponentensysteme (z.B. Mehrkomponentenkit) vorgesehen und werden auch als solche verwendet.

Unter einem Mehrkomponentenkit ist insbesondere ein Zwei- oder (ferner) Mehrkomponentenkit (vorzugsweise ein Zweikomponentenkit) mit einer Komponente (A), welche ein oder mehrere Reaktiv-Kunstharze auf Basis von Vinylester-Urethanharzen beinhaltet, wie oben und unten beschrieben, und den jeweils zugehörigen Härter als Komponente (B) wie oben und nachfolgend definiert, wobei weitere Zusätze in einer oder beider der Komponenten vorgesehen sein können, vorzugsweise eine Zwei- oder ferner Mehrkammervorrichtung, zu verstehen, worin die miteinander reaktionsfähigen Komponenten (A) und (B) und ggf. weitere separate Komponenten so enthalten sind, dass ihre Bestandteile während der Lagerung vor der Anwendung nicht miteinander in Berührung kommen, das es jedoch ermöglicht, die Komponenten (A) und (B) und gegebenenfalls weitere Komponenten zur Befestigung an der gewünschten Stelle, beispielsweise direkt vor oder in einem Loch, so zu vermischen und erforderlichenfalls einzubringen, dass dort die Härtungsreaktion stattfinden kann. Auch geeignet sind Patronen, beispielsweise ineinander verschachtelte Patronen, wie Ampullen; sowie insbesondere Mehr- oder insbesondere Zweikomponenten¬kar¬tuschen (die ebenfalls besonders bevorzugt sind), in deren Kammern die mehreren oder vorzugsweise zwei Komponenten (insbesondere (A) und (B)) des erfindungsgemäßen oder erfindungsgemäß verwendeten Kunstharz-Befestigungssystems mit oben und nachstehend genannten Zusammensetzungen zur Aufbewahrung vor der Nutzung enthalten sind, wobei vorzugsweise auch ein Statikmischer zum entsprechenden Kit gehört.

Die erfindungsgemäßen oder erfindungsgemäß verwendeten Kunstharz-Befestigungssystemen (vorzugsweise können folglich vorzugsweise als Zwei- oder Mehr-Komponentensysteme (Mehrkomponentenkit) vorgesehen sein und auch verwendet werden. Zweikomponentige Systeme können auch solche sein, die eine Komponente z.B. in verkapselter Form in der anderen Komponente beinhalten.

Insbesondere handelt es sich bei den Kunstharz-Befestigungssystemen um Zwei-Komponentensysteme, in denen das Gewichts-verhältnis von Komponente A zu Komponente B bei 99 : 1 bis 1 : 99, bei 99 : 1 bis 50 : 50, bei 99 : 1 bis 60 : 40 oder bei 30 : 70 bis 70 : 30 liegt.

Die Verwendung eines erfindungsgemäßen oder erfindungsgemäß verwendeten Kunstharz-Befestigungssystems am gewünschten Einsatzort oder das Verfahren unter dieser Verwendung erfolgt insbesondere durch Mischen der zugehörigen (vor Mischung reaktionshemmend separierten) Komponenten, insbesondere nahe bei und/oder direkt vor einem Loch oder (beispielsweise insbesondere bei Verwendung von Kartuschen mit Statikmischern) direkt vor und/oder (insbesondere beim Zerstören entsprechender Patronen oder Ampullen) innerhalb eines Loches oder Spaltes, z.B. einem Bohrloch.

Die Einbringung (Einklebung) des oder der Verankerungsmittel(s) erfolgt vorzugsweise bereits kurze Zeit, z.B. 30 Minuten oder weniger, nach dem Mischen der Komponenten des erfindungsgemäßen oder erfindungsgemäß verwendeten Kunstharz-Befestigungssystems. Mit der Mischung und Einbringung der Komponenten beginnen mehrere, im Wesentlichen parallel und/oder nur mit geringer zeitlicher Versetzung ablaufende Reaktionen. Die endgültige Aushärtung erfolgt in situ.

Unter "Einkleben" ist insbesondere eine (stoff- und/oder formschlüssige) Befestigung von Verankerungsmitteln aus Metall (z.B. Hinterschneidanker, Gewindestangen, Schrauben, Bohranker, Bolzen) oder ferner aus einem anderen Material, wie Kunststoff oder Holz, in festen (vorzugsweise bereits als solche fertiggestellten) Substraten, wie Beton oder Mauerwerk, insbesondere, soweit sie Bestandteile von künstlich errichteten Bauwerken sind, vor allem Mauerwerk, Decken, Wände, Böden, Platten, Pfeilern oder dergleichen (z.B. aus Beton, Naturstein, Mauerwerk aus Vollsteinen oder Lochsteinen, ferner Kunststoff oder Holz), insbesondere in Löchern, wie Bohrlöchern, zu verstehen. Mittels dieser Verankerungsmittel können dann beispielsweise Geländer, Abdeckungselemente, wie Platten, Fassadenelemente oder andere Bauelemente befestigt werden.

Wo von "Gemischen von zwei oder mehr davon" die Rede ist, beinhaltet dies insbesondere Gemische von mindesten einem der genannten Bestandteile, die als bevorzugt hervorgehoben sind, mit ein oder mehreren anderen, insbesondere ein oder mehreren ebenfalls als bevorzugt gekennzeichneten Komponenten.

Das Verklebungsmittel ist vorzugsweise nicht selbst bereits fertiggestelltes Substrat.

Spezifische Ausführungsformen der Erfindung betreffen auch die in den Ansprüchen und der Zusammenfassung sowie den Beispielen aufgeführten Varianten - die Ansprüche und die Zusammenfassung werden hier daher durch Bezugnahme aufgenommen.

Die nachfolgenden Beispiele dienen als spezielle Ausführungsformen der Illustration der Erfindung, ohne ihren Umfang einzuschränken.

### Beispiel 1: Herstellung eines Bio-Urethanmethacrylatharzes

Ein erfindungsgemäß verwendbares Bio-Urethanmethacrylatharz wurde unter Verwendung der folgenden Materialien hergestellt:

| Material | Anteil in Gew.-% |
|---|---|
| HPMA | 29,25 |
| Desmodur® eco N 7300 | 35,61 |
| Sarbio 6105 | 35,10 |
| Additive | 0,04 |
| **Gesamt** | **100,00** |

HPMA = Hydroxypropylmethacrylat
Desmodur® eco N 7300 von Bayer MaterialScience AG, Leverkusen, Deutschland

Sarbio 6105® = Isobornylmethacrylat mit 70 % biologisch erneuerbarem Kohlenstoffanteil von Sartomer Arkema, Colombes, Frankreich Additive: umfassen einen Titan-Katalysator, Hydrochinon, weitere Inhibitoren und Stabilisatoren.

In einem 1000-ml-Glaskolben mit Rückflusskühler mit Trockenrohr, Rührer, Tropftrichter und Thermometer wurden Sarbio 6105, HPMA und die Additive , Stabilisatoren vorgelegt und im Ölbad auf 60 °C aufgeheizt. Dann wird das Desmodur® eco N 7300 unter Rühren zugetropft, die Temperatur auf 85 °C erhöht und die Reaktion bis zur vollständigen Umsetzung (geprüft mittels FT-IR durch Freiheit von durch IR-Spektroskopie nachweisbaren Isocyanatgruppen) fortgeführt.

Das erhaltene Harz hatte eine Viskosität von 9680 mPa*s, gemessen bei 23 °C mit Brookfield-Spindel 3 bei 2,5 U/min.

Das fertige Harz enthält 61,9 % Urethanmethacrylatharz, 35,1 % Sarbio 6105 und 3 % HPMA. Es hat einen Bio-Kohlenstoff-Gehalt von 50,4 %.

### Beispiel 2: Kunstharz-Befestigungssystem

Unter Verwendung des Harzes (Reaktivkunstharz) aus Beispiel 1 ("UM-Harz") wurde ein erfindungsgemäßes oder erfindungsgemäß verwendbaes Kunstharz-Befestigungssystem durch Mischen hergestellt, das folgende Bestandteile beinhaltete:

| Eingesetzter Bestandteil | Anteil in Gew.-% |
|---|---|
| UM-Harz aus Beispiel 1 | 28,50 |
| SR210 | 6,50 |
| Additive (Beschleuniger, Inhibitoren) | 1,20 |
| Mineralische Füllstoffe | 45,00 |
| Pyrogene, oberflächenbehandelte Kieselsäure | 1,80 |
| Biobasierter Füllstoff | 17,00 |
| | |
| **Gesamt** | **100,00** |

SR210 ist ein Polyethylenglykoldimethacrylat der Forma Sartomer Arkema, Colombes, Frankreich.

Die Mischung hat einen Bio-Kohlenstoffgehalt von 55,7 % und ist kennzeichnungsfrei gemäß Verordnung (EG) Nr. 1272/2008.

Als Härter wurde folgende Mischung verwendet:

| Eingesetzter Bestandteil | Anteil in Gew.-% |
|---|---|
| Bioglycerin 86 % | 40,00 |
| Dibenzoylperoxid 33 % in inertem Füllstoff | 18,00 |
| Quarzsand | 39,50 |
| Pyrogene oberflächenbehandelte Kieselsäure | 2,00 |
| Additive | 0,50 |
| | |
| **Gesamt** | **100** |

Mörtel und Härter wurden in eine Multibond-kartusche (Mischungsverhältnis 5:1) abgefüllt.

Setzversuche ergeben eine Verbundspannung von 21 N/mm², ermittelt unter folgenden Bedingungen:
Die Ermittlung der Verbundspannung erfolgt durch 5 Setzversuche mit Ankerstangen M12 in Beton (C20/C25) mit einer Setztiefe von 95 mm und einem Bohrlochdurchmesser von 14 mm nach einer Aushärtezeit von 60 min bei 20 °C und einem anschließenden Auszugsversuch. Die gemessene Verbundspannung beträgt 21,9 N/mm². Die gute Eignung zeigt sich auch bei erhöhter Temperatur. Die Verbundspannung bei 80 °C beträgt immer noch 19,0 N/mm² und zeigt damit nur eine sehr geringe Erniedrigung.

## Patentansprüche

1. Verwendung eines radikalisch härtbaren Kunstharz-Befestigungssystems als Klebemittel zur Befestigung von Verankerungsmitteln in Bohrlöchern oder Spalten, wobei das radikalisch härtbare Kunstharz-Befestigungssystem ein Vinylester-Urethanharz auf Basis aus nachwachsenden, biogenen oder biobasierten Rohstoffen erhaltener oligomerer oder polymerer Isocyanate als Isocyanatverbindungen beinhaltet, wobei der Anteil an biogenen oder biobasierten Rohstoffen durch die ¹⁴C-Methode nachgewiesen und der Anteil an biobasiertem Kohlenstoff auf der Grundlage der ASTM International, D6866-12: 2008, Methode A, bestimmt wird.

2. Verwendung nach Anspruch 1, wobei in den oligomeren Isocyanatverbindungen mindestens ein Teil der Isocyanatgruppen als Uretdion- oder insbesondere Isocyanurat-, Iminooxadiazinon-, Uretonimin-, Biuret-, Allophanat- und/oder Carbodiimid-Strukturen vorliegen.

3. Verwendung nach Anspruch 2, wobei die oligomeren oder polymeren Isocyanatverbindungen eine Molekulargewichtsverteilung derart aufweisen, dass keine einzelne Molekülspezies zu mehr als 50 Gewichtsprozent vorliegt und gleichzeitig mehr als 50 Gewichtsprozent der Ketten aus mindestens 3 + 1 kovalent gebundenen Monomereinheiten/Reaktanten zusammengesetzt sind.

4. Verwendung nach einem der Ansprüche 1 bis 3, **dadurch gekennzeichnet, dass** die Isocyanatverbindungen aus unter Einsatz von Stärke, wie solcher aus Feldmais, gewonnenen Penta- oder
Hexamethylendiisocyanaten erhalten sind.

5. Verwendung nach einem der Ansprüche 1 bis 4, wobei die Isocyanatverbindungen oligomere oder polymere Isocyanate auf Basis von Diisocyanaten mit einer C₂-C₈-Kette sind.

6. Verwendung nach Anspruch 5, wobei die Isocyanate Pentamethylendiisocyanat-basierte
oligomere oder polymere Isocyanate sind.

7. Verwendung nach einem der Ansprüche 1 bis 6 eines Kunstharz-Befestigungssystems, welches außer dem Vinylester-Urethanharz auch einen Härter und weitere übliche Zusätze beinhaltet.

8. Verwendung nach einem der Ansprüche 1 bis 7, wobei das Kunstharz-Befestigungssystem in Form eines Mehr-Komponenten-, insbesondere eines ZweiKomponenten-Kits vorliegt.

9. Verfahren zur Herstellung eines Kunstharz-Befestigungssystems nach einem der Ansprüche 1 bis 8, welches beinhaltet, dass als Edukt für die Herstellung des VinylesterUrethan-, insbesondere U(M)A-Harzes, ein oligomeres oder polymeres Isocyanat wie in einem der Ansprüche 1 bis 6 erwähnt verwendet und mit einer mindestens eine Vinylgruppe tragenden Hydroxyverbindung umgesetzt wird.

10. Verfahren nach Anspruch 9, worin bei der Herstellung des Vinylester-Urethanharzes über eine Vorverlängerung ein Präpolymer gebildet und erst danach die noch übrigen Isocyanatgruppen mit einer mindestens eine Vinylgruppe tragenden Hydroxyverbindung, insbesondere einem Hydroxy(C₁-C₆)alkyl(meth)acrylat, umgesetzt werden.

11. Kunstharz-Befestigungssystem, erhältlich nach dem Verfahren nach einem der Ansprüche 9 oder 10.

## Claims

1. Use of a free-radical-hardenable synthetic resin fixing system as adhesive for fixing anchoring means in drilled holes or crevices, wherein the free-radical-hardenable synthetic resin fixing system includes a vinyl ester urethane resin based on oligomeric or polymeric isocyanates obtained from renewable, biogenic or bio-based raw materials as isocyanate compounds, wherein the content of biogenic or bio-based raw materials is detected by the ¹⁴C method and the content of bio-based carbon is determined on the basis of ASTM International, D6866-12: 2008, method A.

2. Use according to claim 1, wherein in the oligomeric isocyanate compounds at least some of the isocyanate groups are present in the form of uretdione or especially isocyanurate, iminooxadiazinone, uretonimine, biuret, allophanate and/or carbodiimide structures.

3. Use according to claim 2, wherein the oligomeric or polymeric isocyanate compounds have a molecular weight distribution such that no single molecular species is present in an amount of more than 50 % by weight and at the same time more than 50 % by weight of the chains are composed of at least 3 + 1 covalently bonded monomer units/reactants.

4. Use according to any one of claims 1 to 3, **characterised in that** the isocyanate compounds are obtained from pentamethylene or hexamethylene diisocyanates obtained using starch, such as from field maize.

5. Use according to any one of claims 1 to 4, wherein the isocyanate compounds are oligomeric or polymeric isocyanates based on diisocyanates having a C₂-C₈chain.

6. Use according to claim 5, wherein the isocyanates are oligomeric or polymeric isocyanates based on pentamethylene diisocyanate.

7. Use according to any one of claims 1 to 6 of a synthetic resin fixing system which, apart from the vinyl ester urethane resin, also includes a hardener and further customary additives.

8. Use according to any one of claims 1 to 7, wherein the synthetic resin fixing system is in the form of a multi-component kit, especially a two-component kit.

9. Method for producing a synthetic resin fixing system according to any one of claims 1 to 8, which includes that an oligomeric or polymeric isocyanate as mentioned in any one of claims 1 to 6 is used as starting material for the production of the vinyl ester urethane resin, especially U(M)A resin, and is reacted with a hydroxy compound carrying at least one vinyl group.

10. Method according to claim 9, wherein in the production of the vinyl ester urethane resin a prepolymer is formed by prelengthening and only then are the remaining isocyanate groups reacted with a hydroxy compound carrying at least one vinyl group, especially with a hydroxy(C₁-C₆)alkyl (meth)acrylate.

11. Synthetic resin fixing system, obtainable in accordance with the method according to either one of claims 9 and 10.

## Revendications

1. Utilisation d'un système de fixation à base de résine synthétique durcissable par voie radicalaire en tant qu'agent adhésif pour la fixation de moyens d'ancrage dans des trous de forage ou des fentes, dans laquelle le système de fixation à base de résine synthétique durcissable par voie radicalaire contient une résine d'ester de vinyle-uréthane à base d'isocyanates oligomères ou polymères obtenus à partir de matières premières renouvelables, biogènes ou biologiques en tant que composés isocyanate, dans laquelle la proportion de matières premières biogènes ou biologiques est attestée par la méthode ¹⁴C et la proportion de carbone biologique est déterminée sur la base de l'ASTM International, D6866-12 : 2008, méthode A.

2. Utilisation selon la revendication 1, dans laquelle, dans les composés isocyanate oligomères, au moins une partie des groupes isocyanate sont présents sous la forme de structures uretdione ou notamment isocyanurate, iminooxadiazinone, urétonimine, biuret, allophanate et/ou carbodiimide.

3. Utilisation selon la revendication 2, dans laquelle les composés isocyanate oligomères ou polymères présentent une distribution du poids moléculaire telle qu'aucune espèce moléculaire individuelle ne soit présente à hauteur de plus de 50 pour cent en poids et simultanément plus de 50 pour cent en poids des chaînes soient composées par au moins 3 + 1 unités monomères/réactifs reliés de manière covalente.

4. Utilisation selon l'une quelconque des revendications 1 à 3, **caractérisée en ce que** les composés isocyanate sont obtenus à partir de diisocyanates de penta- ou d'hexaméthylène obtenus en utilisant de l'amidon, tel que de maïs.

5. Utilisation selon l'une quelconque des revendications 1 à 4, **caractérisée en ce que** les composés isocyanate sont des isocyanates oligomères ou polymères à base de diisocyanates munis d'une chaîne en C₂-C₈.

6. Utilisation selon la revendication 5, dans laquelle les isocyanates sont des isocyanates oligomères ou polymères à base de diisocyanate de pentaméthylène.

7. Utilisation selon l'une quelconque des revendications 1 à 6 d'un système de fixation à base de résine synthétique, qui contient en plus de la résine d'ester de vinyle-uréthane également un durcisseur et d'autres additifs usuels.

8. Utilisation selon l'une quelconque des revendications 1 à 7, dans laquelle le système de fixation à base de résine synthétique se présente sous la forme d'un kit multicomposant, notamment bicomposant.

9. Procédé de fabrication d'un système de fixation à base de résine synthétique selon l'une quelconque des revendications 1 à 8, qui contient, en tant que réactif pour la fabrication de la résine d'ester de vinyle-uréthane, notamment U(M)A, un isocyanate oligomère ou polymère tel qu'évoqué dans l'une quelconque des revendications 1 à 6 est utilisé et mis en réaction avec un composé hydroxy portant au moins un groupe vinyle.

10. Procédé selon la revendication 9, dans lequel, lors de la fabrication de la résine d'ester de vinyle-uréthane, un prépolymère est formé par un prolongement préliminaire et, seulement après, les groupes isocyanate encore restants sont mis en réaction avec un composé hydroxy portant au moins un groupe vinyle, notamment un (méth)acrylate d'hydroxy-alkyle en (C₁-C₆).

11. Système de fixation à base de résine synthétique, pouvant être obtenu par le procédé selon l'une quelconque des revendications 9 ou 10.
